Europäisches Patentamt

European Patent Office

Office européen des brevets

(19)

(11) Veröffentlichungsnummer: **0 043 468**
**B1**

(12) **EUROPÄISCHE PATENTSCHRIFT**

(45) Veröffentlichungstag der Patentschrift:
**27.12.85**

(51) Int. Cl.⁴: **A 61 C 5/06, B 65 D 81/32**

(21) Anmeldenummer: **81104578.0**

(22) Anmeldetag: **13.06.81**

(54) **Mehrkomponentenkapsel zum Aufbewahren und Vibrationsmischen von mindestens zwei Komponenten, insbesondere für Dentalzwecke.**

(30) Priorität: **05.07.80 DE 3025526**

(43) Veröffentlichungstag der Anmeldung:
**13.01.82 Patentblatt 82/2**

(45) Bekanntmachung des Hinweises auf die Patenterteilung:
**27.12.85 Patentblatt 85/52**

(84) Benannte Vertragsstaaten:
**CH DE FR GB IT LI NL SE**

(56) Entgegenhaltungen:
**DE - A - 2 021 356**
**DE - A - 2 255 707**
**GB - A - 2 027 601**

(73) Patentinhaber: **Ernst Mühlbauer KG,**
**Fangdieckstrasse 61, D-2000 Hamburg 53 (DE)**

(72) Erfinder: **Mühlbauer, Ernst, Dipl.-Kfm., Dörpfeldstieg 3,**
**D-2000 Hamburg 52 (DE)**

(74) Vertreter: **Glawe, Delfs, Moll & Partner Patentanwälte,**
**Rothenbaumchaussee 58 Postfach 2570,**
**D-2000 Hamburg 13 (DE)**

BUNDESDRUCKEREI BERLIN

**Beschreibung**

Die Erfindung betrifft eine Mehrkomponentenkapsel zum Aufbewahren und Vibrationsmischen von mindestens zwei Komponenten, insbesondere für Dentalzwecke, in deren Mischraum die Komponenten, gesondert durch eine Trennwand, enthalten sind, deren Rand durch elastische Vorspannung dicht gegen die im wesentlichen zylindrische Innenfläche des Mischraums gepreßt ist und die durch die Mischvibration unter Übertritt der einen Komponente zur anderen verschiebbar ist.

Es ist beim Vibrationsmischen (DE-A-2 021 356) bekannt, eine der beiden getrennt aufzubewahrenden und anschließend zu mischenden Komponenten innerhalb eines Folienbeutels im Mischraum unterzubringen, der die andere Komponente frei enthält (DE-A-2 831 005). Bei der Mischvibration wird der Folienbeutel zerstört, so daß die darin enthaltene Komponente freigesetzt wird und mit der anderen Komponente gemischt werden kann. Die Anordnung hat gegenüber anderen bekannten Mehrkomponentenkapseln, bei denen der Folienbeutel durch aktive Handhabung entleert werden muß, den Vorteil, daß eine solche Handhabung vor dem Mischen nicht erforderlich ist. Jedoch ist das genaue und absolut dichte Einfüllen der Komponenten in den Folienbeutel nicht problemlos. Außerdem kann der Benutzer dem entleerten Folienbeutel nicht in allen Fällen ansehen, ob er seinen Inhalt vollständig entleert hat und ob somit das richtige Mischungsverhältnis zustande gekommen ist. Auch könnte die Abfallbeseitigung Schwierigkeiten machen, wenn der Benutzer nicht absolut sicher sein kann, daß die im Folienbeutel enthalten gewesene Komponente daraus nicht vollständig entfernt wurde. In diesem Zusammenhang ist insbesondere an Quecksilber zu denken.

Auch bei einer anderen bekannten Mehrkomponentenkapsel (DE-A-2 021 356), bei der eine Trennwand durch aktive Handhabung verschoben werden muß, hat den Nachteil der umständlichen Handhabung; außerdem können am Rand der entsprechenden Handhabungseinrichtung, insbesondere beim Vibrationsmischen, Materialien nach außen treten, was insbesondere bei Quecksilber oder Quecksilberdämpfen verhindert werden muß.

Ein Teil dieser Nachteile wird bei einer Mehrkomponentenkapsel der eingangs genannten Art (GB-A-2 027 601) vermieden. Dort wird eine Trennwand ohne äußere Handhabung durch die während des Vibrationsmischens auftretenden Beschleunigungen verschoben, wobei dann eine Komponente am Rand dieser Trennwand in den Raum übertreten kann, in dem sich die andere Komponente befindet. Dabei besteht aber die Gefahr, daß die Komponenten nicht vollständig vereinigt werden, daß vielmehr ein Teil der erstgenannten Komponente durch die Trennwand daran gehindert wird, in den anderen Raum überzutreten. Dies liegt daran, daß die Trennwand auch nach Beginn des Vibrationsmischens den Innenraum der Mehrkomponentenkapsel weiterhin mehr oder weniger hermetisch verschließt.

Die Aufgabe der Erfindung besteht darin, eine Mehrkomponentenkapsel der eingangs genannten Art zu schaffen, die einfach aufgebaut ist und eine vollständige Nutzung der darin enthaltenen Mischungskomponenten ohne die Gefahr eines Durchtritts von Quecksilberdampf nach außen ermöglicht.

Die erfindungsgemäße Lösung besteht darin, daß die Trennwand von einem Plättchen aus weichelastischem Werkstoff gebildet ist, das unter Einwirkung der Mischvibration innerhalb des Mischraums verdrehbar ist.

Durch die bei der Mischvibration auf die Trennwand ausgeübten hohen Beschleunigungskräfte wird diese aus ihrer ursprünglichen Lage gerissen. Aufgrund ihrer besonderen Eigenschaften verdreht sie sich dabei, so daß sie die Querschnittsfläche des Innenraums der Mehrkomponentenkapsel nicht mehr hermetisch abschließt, sondern den freien Übertritt der einen Komponente in den Raum der anderen Komponente ermöglicht. Auf diese Weise können die Komponenten vollständig miteinander gemischt werden, ohne daß vorher die Gefahr besteht, daß eine Komponente in den Raum der anderen übertritt. Aufgrund der weichelastischen Eigenschaften bewirkt die Trennwand vor dem Vibrationsmischen nämlich eine gute Abdichtung, obwohl an die Genauigkeit der Mischkammer-Innenfläche und der Plättchenform keine zu hohen Anforderungen gestellt zu werden brauchen.

Obwohl auch andere Verbindungsmöglichkeiten denkbar sind, wird die Wand zweckmäßigerweise an ihrem Umfang durch Reibschluß an der Mischkammer-Innenfläche gehalten. Im allgemeinen ist die Mischkammer aus formungstechnischen Gründen nicht genau zylindrisch, sondern ein wenig konisch. Dies stört die Anwendung der Erfindung nicht. Im Gegenteil kann dadurch die Einbringung des Plättchens erleichtert werden.

Die Erfindung gestattet eine äußerst einfache Verfahrensweise beim Füllen der Kapseln. Zunächst wird die eine Komponente in die Mischkammer eingefüllt. Danach wird das Plättchen eingeschoben, wobei unter der Voraussetzung stets gleichbleibender Maße seine Lage Gewähr für hinreichenden Reibschluß und für Dichtigkeit gibt. Danach wird die zweite Komponente eingegeben und die Kapsel verschlossen.

Beim Mischvorgang wird die Kapsel ohne vorherige Manipulation in den Vibrationsmischer eingesetzt. Bei der Vibration wirken auf die Wand so hohe Beschleunigungskräfte, daß sie dadurch aus ihrer Lage gerissen wird. Dabei spielt auch die Masse der zu mischenden Komponenten eine Rolle. Je größer die Masse wenigstens einer der beiden Komponenten ist, um so leichter und sicherer vollzieht sich die Lösung der Wand aus ihrer Lage. Dies ist insbesondere bei der Verwendung von Quecksilber als einer Komponente vorteilhaft. Bei leichteren Komponenten kann es zweckmäßig sein, die Wand als solche mit einer solchen Masse auszurüsten, daß die Lösung von der Wand mit Sicherheit stattfinden kann.

Wenn ein Plättchen aus weichelastischem Werkstoff verwendet wird, beispielsweise Silikongummi, sollte es im Verhältnis zu seinem Durchmesser so dick sein, daß es unter der am Umfang darauf ausgeübten Radialkraft nicht knicken kann. Der Reibschluß muß selbstverständlich stark genug sein, um allen während der Lagerung und während des Transports (beispielsweise beim Fall) auftretenden Beschleunigungskräften gewachsen zu sein.

Selbstverständlich ist der Reibschluß nicht die einzige mögliche Verbindungsart zwischen der Trennwand und der Kapsel. Denkbar ist beispielsweise eine einstückige Ausführung mit Sollbruchstelle am Wandübergang oder eine formschlüssige Halterung des Rands der Trennwand zwischen zwei umlaufenden Kapselwandwülsten. Die Erfindung wird im folgenden näher unter Bezugnahme auf die Zeichnung erläutert, die zwei Ausführungsbeispiele in zwei Längsschnitten veranschaulicht.

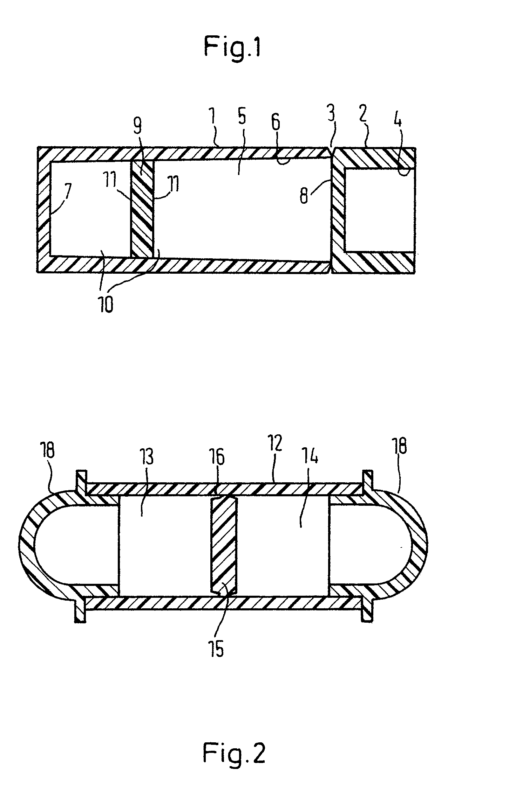

Gemäß Fig. 1 besteht die Kapsel aus einem Behälterteil 1 und einem Deckel 2, in der die Sollbruchstelle 3 aufgeschweißt ist und mittels eines Stabes, der in die Bohrung 4 passend einsteckbar ist, aufbrechbar ist.

Der Behälterteil 1 fließt in den Mischraum 5 ein, der von der Mischkammer-Innenfläche 6, der Bodenfläche 7 und der Deckelfläche 8 begrenzt wird. Die Mischraum-Innenfläche 6 ist schwach konisch. Die Trennwand 9, die ein Plättchen aus gummielastischem Silikonkautschuk ist, trennt den Mischraum in zwei Abteilungen 10 zur getrennten Aufnahme der beiden Komponenten, beispielsweise Quecksilber und Silberpulver. Das Plättchen 9 wird von zwei parallelen, ebenen Flächen 11 und einer zylindrischen Außenfläche begrenzt, die an der Mischraum-Innenfläche 6 anliegt. Auf die Genauigkeit dieser Flächen kommt es nicht sonderlich an. Beispielsweise kann die zylindrische Außenfläche des Plättchens durch Ausstanzen aus Folienmaterial gebildet sein, demzufolge mehr oder weniger starke Abweichungen von der zylindrischen Gestalt zeigen. Diese Abweichungen werden durch elastische Verformung des Plättchens wettgemacht, wenn dies unter elastischer Durchmesserverringerung in den Mischraum 5 axial eingeschoben wird. Es wird nämlich, im Vergleich mit dem Durchmesser des Mischraums an derjenigen Stelle, an der es zu sitzen bestimmt ist, mit Übermaß hergestellt, so daß die elastische Verformung eine Anpreßkraft am Umfang hervorruft, die den Reibschluß mit der Mischraum-Innenfläche 6 sichert.

Beim Füllen der Kapseln wird zunächst das Quecksilber in den Mischraum 5 gegeben, danach das Plättchen 9 bis auf etwa ein Drittel der Höhe des Mischraums eingedrückt und schließlich Silberpulver in den restlichen Teil des Mischraums 5 gegeben. Anschließend wird der Deckel 2 durch Ultraschall aufgeschweißt.

Bei der Benutzung wird die Kapsel in irgendeinen handelsüblichen Vibrationsmischer gespannt. Bei der Vibration wird das Plättchen 9 aus seiner Stellung gerissen. Erfahrungsgemäß stellt es sich mit seiner größten Querausdehnung in Längsrichtung der Kapsel ein, und zwar nahe dem engeren Ende des Mischraums 5. Die Mischung der zu mischenden Komponenten wird dadurch nicht beeinträchtigt. Nach dem Abbrechen des Deckels kann der Inhalt ohne Behinderung durch das Plättchen entnommen werden.

Das Ausführungsbeispiel gemäß Fig. 2 zeigt einen an beiden Enden offenen Behälterteil 12, dessen Mischraumkammer 13 und 14 durch eine Wand 15 getrennt sind, die einstückig mit dem Behälterteil 12 hergestellt ist und an ihrem Umfang über Sollbruchstellen 16 mit der Wand des Behälterteils verbunden ist. Die beiden Enden sind durch Deckel 18 verschlossen.

Die Masse der Trennwand 15 ist so bemessen, daß sie unter den Vibrationsbeschleunigungen eine die Festigkeit der Sollbruchstelle 16 übersteigende Kraft entwickelt, dadurch aus ihrer Lage herausgebrochen wird und dabei die Räume 13 und 14 miteinander verbindet. Sie stellt sich bei der Vibration in Längsrichtung der Kapsel ein, so daß sie weder die Mischbewegung der Komponenten noch die Entnahme derselben behindern kann.

## Patentanspruch

Mehrkomponentenkapsel zum Aufbewahren und Vibrationsmischen von mindestens zwei Komponenten, insbesondere für Dentalzwecke, in deren Mischraum (5) die Komponenten, gesondert durch eine Trennwand (9), enthalten sind, deren Rand durch elastische Vorspannung dicht gegen die im wesentlichen zylindrische Innenfläche (6) des Mischraums (5) gepreßt ist und die durch die Mischvibration unter Übertritt der einen Komponente zur anderen verschiebbar ist, dadurch gekennzeichnet, daß die Trennwand von einem Plättchen (9) aus weichelastischem Werkstoff gebildet ist, das unter der Einwirkung der Mischvibration innerhalb des Mischraums (5) verdrehbar ist.

## Claim

A multi-component capsule for storing and vibratory mixing of at least two components, more especially for dental purposes, in whose mixing chamber (5) the components are contained, separated by a partition wall (9) whose edge is tightly pressed by elastic pre-loading against the substantially cylindrical inner surface (6) of the mixing chamber (5) and which is displaceable due to the mixing vibration, while one component passes over to the other component, characterised in that the partition wall is formed by a lamina (9) which consists of a softelastic material and which is twistable under the action of the mixing vibration within the mixing chamber (5).

## Revendication

Capsule à plusieurs composants pour la conservation et le mélange par vibration d'au moins deux composants, utilisable en particulier en dentisterie, dans la chambre de mélange (5) de laquelle sont contenus les composants, séparés par une cloison (9) dont le bord est pressé de façon étanche, par précontrainte élastique, contre la surface intérieure (6) essentiellement cylindrique de la chambre de mélange (5) et qui peut être déplacée, sous l'effet de la vibration de mélange, avec passage de l'un des composants vers l'autre, caractérisée en ce que la cloison est constituée par une plaquette (9) de matière souple élastique qui peut se déformer à l'intérieur de la chambre de mélange (5) sous l'action de la vibration de mélange.

## Fig.1

## Fig.2